Europäisches Patentamt

European Patent Office

Office européen des brevets

(19)

(11) Publication number: **0 045 146**
**B1**

(12) # EUROPEAN PATENT SPECIFICATION

(45) Date of publication of patent specification: **29.01.86**    (51) Int. Cl.⁴: **G 07 F 13/10, B 65 B 43/44**

(21) Application number: **81303147.3**

(22) Date of filing: **10.07.81**

(54) **Cup dispenser.**

(30) Priority: **29.07.80 GB 8024753**

(43) Date of publication of application:
**03.02.82 Bulletin 82/05**

(45) Publication of the grant of the patent:
**29.01.86 Bulletin 86/05**

(84) Designated Contracting States:
**AT CH DE FR LI NL SE**

(56) References cited:
**DE-A-2 519 183**
**DE-B-1 148 789**
**FR-A-1 272 145**
**FR-A-2 176 878**
**GB-A-1 152 414**
**US-A-1 907 713**
**US-A-3 840 150**
**US-A-3 932 978**

(73) Proprietor: **ROBOSERVE LIMITED**
**19 Aintree Road**
**Perivale Greenford Middlesex (GB)**

(72) Inventor: **Cheeseman, Brian**
**Farthings Cottage Chesham Lane**
**Chalfont St. Peter Buckinghamshire (GB)**
Inventor: **Thomas, Ronald**
**120 Linden Avenue**
**Eastcote Middlesex (GB)**

(74) Representative: **Spence, Anne et al**
**Barlin Professional Services Barlin House 20**
**High Street**
**Carshalton, Surrey SM5 3AG (GB)**

Courier Press, Leamington Spa, England.

## Description

The invention relates to a cup dispenser particularly for dispensing cups singly from a stack of cups which will normally be a vertical stack.

The dispenser is of the sort in which a plurality of cams are spaced about a first axis (coaxial with the axis of the stack of cups) and drive means are provided for rotating the cams together, each about an associated axis parallel to the first axis. Each of the cams has a cam face which is a helix about its axis and is arranged to engage the rim of the end cup of a stack of cups located in the dispenser so that rotation of the cams in one direction pushes the end cup away from the remainder of the stack to dispense it.

Cams having cams faces for such dispensing are known, for example, from Specifications DE 1148789, US 3840150, GB 1152414, GB 1537184 and DE 2519183. However, all these are square faced cams, that is all the part of the dispensing cam face, which contacts the bottom article to push it downwards, is downwardly facing and in the direction of any diameter is normal to the axis of rotation of the cam. We have found that conventional square faced cam faces do not provide a satisfactory dispensing action and tend to dig into the rim of a cup and damage it.

An object of the present invention is to provide a cam profile which provides a more satisfactory dispensing action and minimizes damage to the rim of a cup being dispensed.

Accordingly, the present invention provides a dispenser for dispensing cups one by one from a stack comprising a plurality of cams spaced about a first axis, co-axial with the axis of the stack of cups when present, drive means for rotating the cams together, each about an associated axis parallel with the first axis, each of the cams having a cam face which is a helix about its axis with a spiral angle in the range 8° to 14°, the cam face being arranged to engage the rim of the end cup of a stack of cups located in the dispenser so that rotation of the cams in one direction pushes the end cup away from the remainder of the stack to dispense it, characterised in that for each cam the cam face which engages said rim is chamfered with respect to any diameter of the cam, with an angle of chamfer in the range 22° to 28°.

The cam profile defined is particularly suited for use with foam cups and dispenses the cups without damaging their rims.

Preferably each cam also has an upwardly facing cam surface for engaging the next cup in the stack and holding up the stack as the lowermost cup is dispensed. Preferably this upwardly directed cam face is also chamfered with respect to any diameter, preferably the chamfer angle being in the range 19° to 26° and with advantage substantially 22½°.

The spiral angle of the helix of the dispensing cam face is preferably in the range of 10° to 12° and with advantage substantially 11°. The effective length of the cam face extends through at least 270° around the cam and with advantage through over 300°.

The dispenser preferably comprises a hollow casing in which the cam and drive, in the form of a ring gear, are mounted, with a central aperture in the top and bottom for receiving the stack of cups and dispensing them downwardly. According to another feature of the invention the casing is made in top and bottom identical halves which are secured together by bolts or the like. The bolts can be additionally used to secure the casing to a mounting and the arrangement is such that the bolts can be inserted from either the top or the bottom to extend beyond either the bottom or top respectively for mounting to a surface either beneath or above the dispenser.

One embodiment of cup dispenser will now be described, by way of example only, with reference to the accompanying drawings of which:—

Fig. 1 is a plan view with the top half of the casing removed,

Fig. 2 is an axial section on the line II—II of Fig. 1 but with the top half of the casing shown,

Fig. 3 is a view showing some cups of a stack engaged by two cam projections,

Fig. 4 is a side view of one cam of the dispenser, and

Fig. 5 is a development view of the cam of Fig. 3 on an enlarged scale.

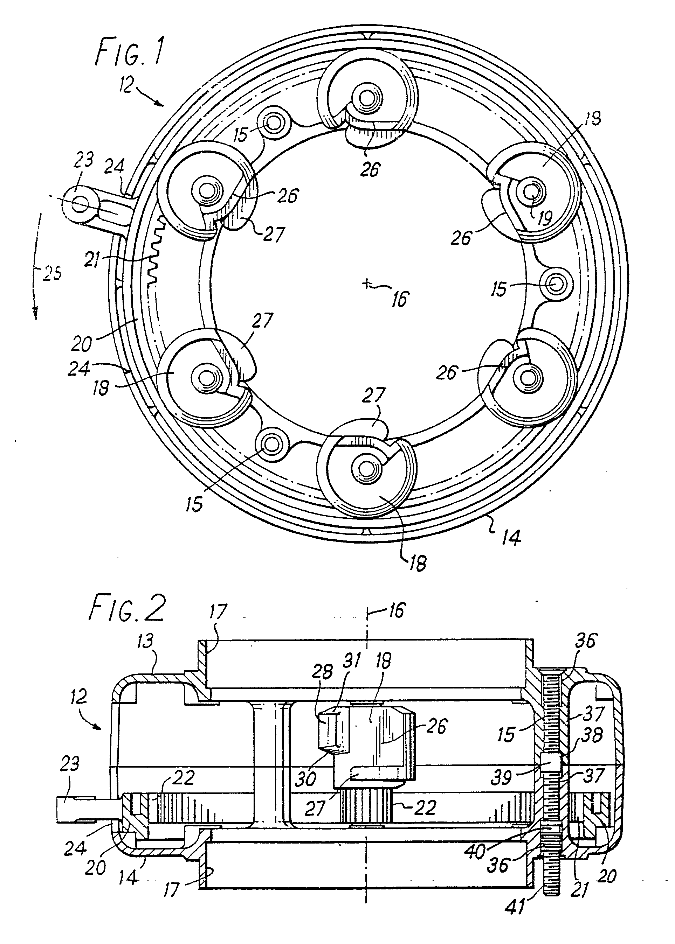

The dispenser has a hollow casing 12 having identical upper and lower halves 13 and 14 respectively, connected together by three equiangularly spaced bolts 15. The dispenser has a vertical axis 16 and its top and bottom are effectively open and define coaxial bores 17 to locate a cup stacking tube (not shown) at the top and an outlet guide tube (not shown) at the bottom. Six cams 18 are mounted in the casing equiangularly spaced about the axis 16, the cams being angularly oscillatable about their own axes 19 by means of a common ring gear 20. The ring gear 20 is formed on its inner periphery with teeth 21 which engage a pinion gear portion 22 of each of the cams. The ring gear 20 has an operating handle 23 which projects through an aperture 24 in the casing and by means of which the ring gear can be reciprocated through an angle of 30° as indicated by the arrow 25. The ring gear is shown in one extreme position, the rest position, in Fig. 1 in which a flat upright surface 26 of each cam faces inwardly and surfaces 26 form together a hexagon and a support member 27 of each cam projects into the central space of the dispenser and engages under the lip of the lowermost cup to hold up the stack.

Each cam has a cam projection 28 around its surface, the cam projection 28 having a helically formed downwardly facing dispensing surface 30 and an upwardly facing surface 31. These surfaces are both chamfered at an angle to any diameter of the cam, in this example the lower cam face 30 making an angle of 25° with such diameter and the upper cam face making an angle of 22½° with such diameter.

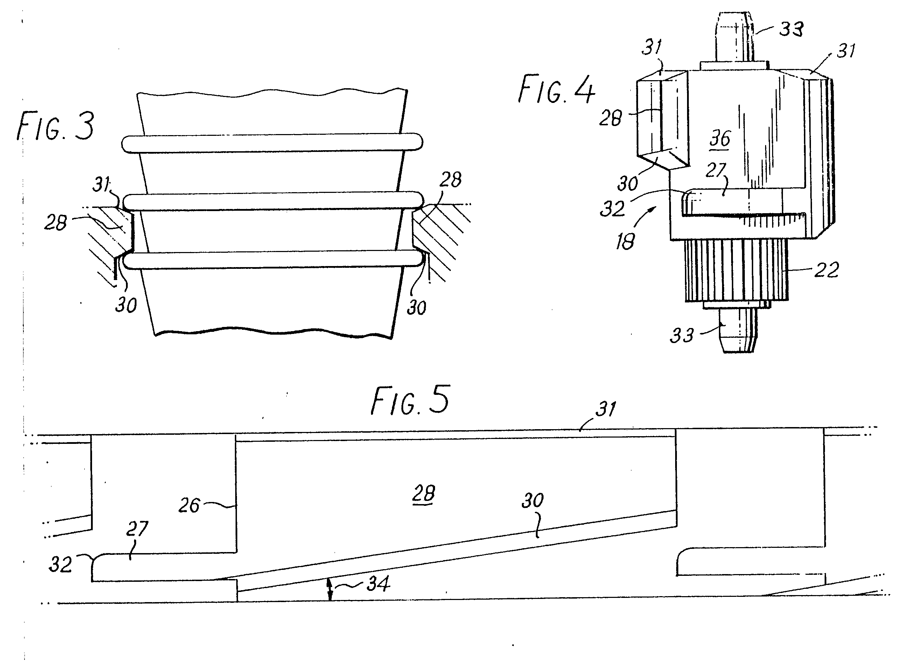

As the operating handle 23 is moved from the rest position shown in Fig. 1 the cams are rotated together to enter the cam projections between the lips of the lowermost cup and the second lowermost cup as best seen in Fig. 3. The cups are made of expanded polystyrene. Further rotation of the cams pushes the lowermost cup downwardly away from the stack due to the helical form while the upper faces 31 continue to support the stack. The operating handle is then reciprocated back to its rest position in which the cam projections do not engage the cups which are supported on the members 27. The end of each member 27 is radiused as indicated at 32. As best seen in Fig. 5 the spiral angle of the helix indicated at 34 is 11°.

Each of the halves of the casing are formed with six recesses and aligned pairs of recesses form bearing seats for the opposite projecting shaft portions 33 of the cams.

For receiving the bolts 15, the halves of the casing are each formed with a countersunk bore 36 opening to the outer (that is the upper or lower) surface, extending inwardly to a counter bore 37 of smaller diameter which in turn opens to the inner surface via a further bore 38 of diameter greater than bore 37. A ring dowel 40 is located in the aligned mating bores 38 and through this bolt 15 passes. Each bolt can be inserted from either the top or the bottom with its head located in one of the bores 36 and a threaded member 40 located in the other bore 36 for mating with the bolt. The end 41 of the bolt then projects beyond one bore 36 and can be used for mounting the dispenser on its machine chassis or wall brackets. This arrangement allows the two casing halves to be made in the same mould and eliminates the need for a separate fixing means to mount the dispenser. It allows the dispenser to be mounted either to an upwardly or a downwardly facing surface.

**Claims**

1. A dispenser for dispensing cups one by one from a stack, comprising a plurality of cams (18) spaced about a first axis (16), co-axial with the axis of the stack of cups when present, drive means (20) for rotating the cams together, each about an associated axis parallel with the first axis, each of the cams having a cam face (30) which is a helix about its axis with a spiral angle (34) in the range 8° to 14°, the cam face being arranged to engage the rim of the end cup of a stack of cups located in the dispenser so that rotation of the cams in one direction pushes the end cup away from the remainder of the stack to dispense it, characterised in that for each cam (18, 28), the cam face (30) which engages said rim is chamfered with respect to any diameter of the cam, with an angle of chamfer in the range of 22° to 28°.

2. A dispenser according to Claim 1 or Claim 2 in which the angle of chamfer is substantially 25°.

3. A dispenser according to Claim 1 or Claim 2 characterised in that the oppositely facing cam surface (31), for engaging the next cup in the stack as the end cup is dispensed, is chamfered with respect to any diameter, at an angle in the range of 19° to 26°.

4. A dispenser according to Claim 3 characterised in that the angle of chamfer of each of the oppositely facing cam surfaces (31) is substantially $22\frac{1}{2}°$.

5. A dispenser according to any of Claims 1 to 4 characterised in that the spiral angle of the helix of each cam face is in the range 10° to 12°.

6. A dispenser according to Claim 5 characterised in that the spiral angle is substantially 11°.

7. A dispenser according to any of Claims 1 to 6 characterised in that the effective length of the cam face (30) of each cam (28) extends through at least 270° around the cam.

8. A dispenser according to Claim 7 characterised in that said effective length extends through over 300°.

9. A dispenser according to any of Claims 1 to 8 characterised in that the cams and drive, in the form of a ring gear, are mounted in a hollow casing, with a central aperture in the top and bottom for receiving the stack of cups and dispensing them downwardly characterised in that the casing is formed in top and bottom identical halves (13, 14) which are secured together.

10. A dispenser according to Claim 9 characterised in that the halves are secured together by bolts (15) which can be inserted from either the top or the bottom to extend beyond the casing at either end (41) for mounting the dispenser to a surface either above or beneath the dispenser.

**Patentansprüche**

1. Abgabevorrichtung zur einzelnen Abgabe von Bechern von einem Stapel, bestehend aus einer Mehrzahl von Mitnehmern (18) die um eine erste koaxial zur Achse des Becherstapels — falls vorhanden — befindliche Achse (16) mit Abstand von dieser und voneinander angeordnet sind, Antriebsmittel (20) zum gemeinsamen Drehen der Mitnehmer, jeweils um eine zugehörige zur ersten Achse parallel Achse, wobei jeder Mitnehmer eine Mitnehmerfläche (30) in Form einer Schraubenlinie um seine Achse mit einem Schraubenwinkel (34) im Bereich zwischen 8° und 14° aufweist, die so angeordnet ist, daß sie am Rand des letzten Bechers eines in der Abgabevorrichtung befindlichen Becherstapels angreift, so daß bei einer Verdrehung der Mitnehmer in einer Richtung der letzte Becher vom Rest des Stapels weggedrückt wird um ihn abzugeben, dadurch gekennzeichnet, daß die Mitnehmerfläche (30) jedes Mitnehmers (18, 28) der an diesem Rand angreift, relativ zu jedem Durchmesser des Mitnehmers abgeschrägt ist und zwar mit einem Schrägungswinkel im Bereich zwischen 22° und 28°.

2. Abgabevorrichtung nach Anspruch 1, dadurch gekennzeichnet, daß der Schrägungswinkel im wesentlichen 25° beträgt.

3. Abgabevorrichtung nach Anspruch 1 oder 2, dadurch gekennzeichnet, daß die in entgegengesetzte Richtung wei senden, am nächsten Becher des Stapels nach der Abgabe des letzten Bechers angreifende Mitnehmerfläche (31) relativ zu jedem Durchmesser mit einem Winkel im Bereich zwischen 19° und 26° abgeschrägt ist.

4. Abgabevorrichtung nach Anspruch 3, dadurch gekennzeichnet, daß der Abschrägwinkel je der in die entgegengesetzte Richtung weisenden Mitnehmerflächen (31) im wesentlichen 22½° beträgt.

5. Abgabevorrichtung nach einem der Ansprüche 1 bis 4, dadurch gekennzeichnet, daß der Schraubenwinkel der Schraubenlinie jeder Mitnehmerfläche im Bereich zwischen 10° und 12° liegt.

6. Abgabevorrichtung nach Anspruch 5, dadurch gekennzeichnet, daß der Schraubenwinkel im wensentlichen 11° beträgt.

7. Abgabevorrichtung nach einem der Ansprüche 1 bis 6, dadurch gekennzeichnet, daß die wirksame Länge der Mitnehmerfläche (30) jedes Mitnehmers sich über einen Winkel von wenigstens 270° um den Mitnehmer erstreckt.

8. Abgabevorrichtung nach Anspruch 7, dadurch gekennzeichnet, daß die wirksame Länge sich über einen Winkel von 300° um den Mitnehmer erstreckt.

9. Abgabevorrichtung nach einem der Ansprüche 1 bis 8, dadurch gekennzeichnet, daß die Mitnehmer und der Antrieb in Form eines Hohlrades in einem hohlen Gehäuse mit einer zentralen Öffnung in Decke und Boden untergebracht sind, welche zur Aufnahme des Stapels der Becher und deren Abgabe nach unten dient, wobei das Gehäuse aus identischen oberen und unteren Hälften (13, 14) besteht und diese miteinander verbunden sind.

10. Abgabevorrichtung nach Anspruch 9, dadurch gekennzeichnet, daß die Hälften über Schrauben (15) miteinander verbunden sind, die entweder von oben oder unten eingeführt werden können und sich jeweils über das andere Ende des Gehäuses erstrecken, um die Abgabevorrichtung entweder an einer darüber oder darunter befindlichen Montagefläche zu befestigen.

**Revendications**

1. Distributeur pour la distribution de gobelets, un à la fois, à partir d'une pile, comprenant une pluralité de cames (18) espacées autour d'un premier axe (16), coïncident avec l'axe de la pile de gobelets lorsqu'ils sont présents, un moyen de commande (20) pour faire tourner ensemble les cames, chacune autour d'un axe associé parallèle au premier axe, chacune des cames ayant une face à came (30) qui est une hélice autour de son axe avec un angle (34) de la spirale compris entre 8° et 14°, la face à came étant disposée pour venir en contact avec le pourtour du gobelet extrême d'une pile de gobelets située dans le distributeur de sorte que la rotation des cames dans une direction pousse le gobelet extrême pour l'éloigner du reste de la pile et le distribuer, caractérisé en ce que pour chaque came (18, 28), la face à came (30) qui est en contact avec le pourtour est chanfreinée s'agissant d'un diamètre quelconque de la came, avec un angle du chanfrein compris entre 22 et 28°.

2. Distributeur selon la revendication 1 ou la revendication 2, dans lequel l'angle du chanfrein est sensiblement 25°.

3. Distributeur selon la revendication 1 ou la revendication 2, caractérisé en ce que la surface (31) de came dirigée dans le sens opposé, pour venue en contact avec le gobelet suivant de la pile lorsque le gobelet extrême est distribué, est chanfreinée s'agissant d'un diamètre quelconque, suivant un angle compris entre 19° et 26°.

4. Distributeur selon la revendication 3, caractérisé en ce que l'angle du chanfrein de chacune des surfaces (31) à came dirigées dans le sens opposé est sensiblement 22,5°.

5. Distributeur selon l'une quelconque des revendications 1 à 4, caractérisé en ce que l'angle de la spirale de l'hélice de chaque face à came est compris entre 10° et 12°.

6. Distributeur selon la revendication 5, caractérisé en ce que l'angle de la spirale est sensiblement 11°.

7. Distributeur selon l'une quelconque des revendications 1 à 6, caractérisé en ce que la longueur effective de la face à came (30) de chaque came (28) s'étend sur un angle d'au moins 270° autour de la came.

8. Distributeur selon la revendication 7, caractérisé en ce que la longueur effective s'étend sur un angle supérieur à 300°.

9. Distributeur selon l'une quelconque des revendications 1 à 8, caractérisé en ce que les cames et la commande, sous forme d'une couronne dentée, sont montées dans un boîtier creux, avec une ouverture centrale au sommet et au fond pour recevoir la pile de gobelets et les distribuer vers le bas, caractérisé en ce que le boîtier est formé de moitiés supérieure et inférieure identiques (13, 14) qui sont fixées ensemble.

10. Distributeur selon la revendication 9, caractérisé en ce que les moitiés sont fixées ensemble par des boulons (15) qui peuvent être insérés soit à partir du sommet soit à partir du fond de manière à s'étendre au-delà du boîtier à l'une et l'autre extrémité (41) pour le montage du distributeur sur une surface soit au-dessus soit au-dessous du distributeur.

FIG.1

FIG.2

FIG. 3

FIG. 4

FIG. 5

0 045 146